Europäisches Patentamt

European Patent Office

Office européen des brevets

(11) Publication number: **0 522 415 A1**

# EUROPEAN PATENT APPLICATION

(21) Application number: **92111042.5**

(22) Date of filing: **30.06.92**

(51) Int. Cl.⁵: **C01F 11/18**, C08K 3/26

(30) Priority: **04.07.91 JP 164477/91**
**17.04.92 JP 98115/92**

(43) Date of publication of application:
**13.01.93 Bulletin 93/02**

(84) Designated Contracting States:
**DE FR GB**

(71) Applicant: **NITTETSU MINING CO., LTD.**
**3-2, Marunouchi 2-chome Chiyoda-ku**
**Tokyo 100(JP)**

(72) Inventor: **Tanabe, Katsuyuki**
**30-15, Matsubara 6-chome, Setagaya-ku**
**Tokyo(JP)**
Inventor: **Umebayashi, Masaharu**
**8-1, Shimorenjaku 8-chome**
**Mitaka-shi, Tokyo(JP)**
Inventor: **Ugomori, Atsushi**
**8-1, Shimorenjaku 8-chome**
**Mitaka-shi, Tokyo(JP)**
Inventor: **Asaba, Seiji**
**840, Tsukui, Yokosuka-shi**
**Kanagawa(JP)**

(74) Representative: **Rau, Manfred, Dr. Dipl.-Ing. et al**
**Patentanwälte Rau, Schneck & Hübner,**
**Königstrasse 2**
**W-8500 Nürnberg 1(DE)**

(54) Ethylene glycol dispersion of crystalline calcium carbonate, crystalline calcium carbonate, and plastic molded product and polyester film containing the same.

(57) An ethylene glycol dispersion of crystalline calcium carbonate is obtained by carbonation in an ethylene glycol system. The dispersion may be filtered. washed, and dried to obtain a crystalline calcium carbonate, which can incorporated in a polyester film. Alternatively, the calcium carbonate, after being surface treated with a phosphate, etc. to enhance the affinity with the plastic, may be incorporated in a plastic molded product.

EP 0 522 415 A1

According to one aspect, the present invention relates to an ethylene glycol dispersion of crystalline calcium carbonate and crystalline calcium carbonate obtained from such a dispersion.

In another aspect, the present invention relates to a plastic molded product containing calcium carbonate, the calcium carbonate which is produced by a carbonation reaction in an ethylene glycol system, being completely free of coagulation by drying, i.e., assuming the most excellent inorganic filler, and having a particle distribution which is very uniform.

A still further aspect of the present invention is that it relates to a polyester film, which contains calcium carbonate produced in an ethylene glycol system, excels in lubricating properties, surface smoothness, and anti-wearing properties, and is free of any large projection.

Synthetic calcium carbonates which have been well-known in the industries include those which are in the form of spindles, colloids, cubes, or poles. All of these calcium carbonates belong to either calcite or argonite in terms of their construction. Also, vaterite and amorphous calcium carbonates have been known. In the production of these calcium carbonates, a carbonation reaction in an alcoholic system or a system where an alcohol is added has been suggested. For example, a process for producing an amorphous calcium carbonate in which the carbonization reaction is carried out in a system using an alcohol as a medium, as disclosed in JP-B 2-16244, a process for synthesizing vaterite in a metabolic system as disclosed in Adhesive Society of Japan, Vol. 21, No. 10 (1985), and a process for producing a vaterite type calcium carbonate in a system to which an organic medium is added, as disclosed in JP-A 63- 103824, can be mentioned.

On the other hand, plastics which are one of the fields where the calcium carbonate according to the present invention is applied, are relatively inexpensive materials which have light weight, toughness, a capability to be molded into various shapes, beautiful appearance, and a low tendency to rot or corrosion in comparison with metals, ceramics, wood, and so on. There are various kinds of plastics. Various plastics have their inherent characteristic, for example, polyvinyl chloride has good electrically insulating properties and excellent chemical resistance, polyethylene has good electrically insulating properties, chemical resistance, light weight, and is easy to be molded, and polypropyrene have good mechanical strength, light weight, and remains relatively stable under heat application. Furthermore, polyesters, particularly polyethylene terephthalate, have excellent physical and chemical characteristics, thus are widely utilized as films, fibers, and various molded products. Above all, in the film industries, a wide variety of applications for plastics, e.g., magnetic tapes, such as audio or video tapes, packing, agricultural and OHP applications have been known.

When fillers, such as calcium carbonate, titanium dioxide, silica, and talc are added to such a plastic, its impact strength, sliding properties, ant-wearing properties, dimensional stability, thermal expansion coefficient, electric properties, heat resitance, and chemical resistance can be improved. The requirements to be satisfied by these particles are that:

(1) they have a fine particle size and their particle distribution is sharp;

(2) they have good dispersibility in the plastics;

(3) they have good compatibility with the plastics; and the like.

As a process for producing the calcium carbonate which is used for such a purpose, a process in which a colloidal calcium carbonate whose primary particle size is in the range of 0.04 to 0.08 micron is surface-treated with an alkali metal salt of a fatty acid or resinous acid, and a process in which a calcium carbonate whose primary particle size is more than 0.1 micron and which has a dispersibility of more than a base level is produced by the reaction between an aqueous suspension of calcium hydroxide and carbon dioxide gas and, for example, in the case of being used as a filler for a polyester, is wet-pulverized in a glycolic system, are disclosed in JP-B 2- 48174, and other literature. JP-A 1-4239 and JP-A 1-4240 disclose processes for improving the dispersibility in glycol and compatibility with a polyester in which the above-mentioned synthetic calcium carbonate is previously surface-treated with a copolymer of an alpha, beta-monoethylenically unsaturated carboxylic acid.

However, the calcium carbonate produced by any of these methods is a calcium carbonate produced in an aqueous medium. In particular, since it is dispersed via a pulverization step in a glycol, the production steps are complicated and, what is more, very large particles and excessively pulverized particles are necessarily incorporated. Until now, no satisfactory process has yet come about concerning the shape and particle size distribution.

In light of the above situation, the present inventors have been seriously studied, resulting in the finding that a process in which a calcium compound or metal calcium is carbonated in a media consisting essentially of ethylene glycol and the resulting product is then aged, the process being completely different from the conventional processes, can produce an ethylene glycol dispersion of a novel calcium carbonate, thereby achieving the present invention. The dispersion does not require a drying step nor a pulverization step, contains a calcium carbonate having a novel shape and a sharp particle size distribution whose secondary particle size is in the range of 0.1 to 2.0 microns, and possesses characteristics originated from such a calcium carbonate.

The object of the present invention is to provide an ethylene glycol dispersion of crystalline calcium carbonate usable as an additive for improving the wearing coefficients and sliding properties of polyester films and fibers, and to provide an industrially valuable crystalline calcium carbonate obtainable from said dispersion which can be used as a filler for allowing it to be contained in plastics, represented by polyvinyl chloride, polyethylene, and polypropylene, thereby imparting functionalities to the plastics, and as various pigments, fillers, carriers for catalysts, and functional powders.

According to the present invention, the above object can be attained by an ethylene glycol dispersion of crystalline calcium carbonate produced by carbonation in an ethylene glycol system.

Desirably, at least one raw material selected from the group consisting of calcium oxide, calcium hydroxide, and calcium halides is subjected to a carbonation reaction in an ethylene glycol system, and then aged.

The dispersion suitably possesses a secondary particle size in the range of 0.1 to 2.0 microns and a BET specific surface area in the range of 20-300 $m^2/g$.

Also, the above object is attained by a dried powder of a crystalline calcium carbonate produced from the above dispersion.

Another object of the present invention is to provide a plastic molded product whose functionalities, such as strength, are enhanced and whose added values are improved, particularly polyester film which possesses excellent sliding properties, surface smoothness and anti-wearing properties.

This object is achieved by filling into a subjective plastic the remaining calcium carbonate without treating or after being surface-treated with a treating agent having high affinity.

Different from those calcium carbonates which are obtained by the conventional processes, the calcium carbonate according to the present invention, which is produced in ethylene glycol, has no need of any drying or pulverization steps during the addition of polyester, and there is no fear of any incorporation of super large particles or excessively minute particles. The particles are mainly based on a sphere form, and the particle size is in the range of 0.1 to 2.0 microns, which significantly corresponds with the desired particle size. Moreover, the calcium carbonate has the crystalline structure of calcite and, thus, can be considered to be very stable during the production steps and in the finished product. Consequently, the calcium carbonate according to the present invention has markedly excellent characteristics as inorganic minute particles for improving the sliding characteristics of polyester films and fibers. Furthermore, whether or not a surface-treatment is carried out, the dried powder of this calcium carbonate can be used to impart highly functional physical properties to other plastics, such as polyvinyl chloride, polyethylene, and polypropylene.

The present calcium carbonate can be utilized not only as pigments and fillers, such as paints and sealants, cosmetic products, and toothpastes, but also as carriers for catalysts and functional powders, making use of its high BET surface area of 20 to 300 $m^2/g$.

The construction, function and significance of the present invention will be understood more clearly by the following description.

The calcium carbonate according to the present invention is produced by carbonating a raw material calcium compound or metal calcium in a medium consisting mainly of ethylene glycol, followed by aging over a prescribed period. The raw materials to be used in the carbonation include, but are not restricted to, calcium compounds, such as calcium oxide, calcium hydroxide, and calcium chloride, and metal calcium. One or more of these raw materials are suspended in ethylene glycol to prepare a raw material slurry. In this case ethylene glycol may contain a total of not more than 20% by weight, preferably not more than 10% by weight of water and/or alcohols other than ethylene glycol. If too large of an amount of the solvents other than ethylene glycol are incorporated, the calcium carbonate having the desired shape and characteristics cannot be obtained in many cases. The concentration of calcium in the slurry in the production of the present calcium carbonate is not more than 10% by weight as the metal. If the concentration is unduly high, since the slurry is gelatinized to be solidified before the termination of the carbonation reaction, the carbonation cannot proceed perfectly. Conversely, if the concentration is too low, the production efficiency becomes worse. For such reasons, the desirable calcium concentration ranges from 1.0 to 5.0% by weight. In the carbonation reaction, either a carbon dioxide gas or a carbonate compound may be utilized. In the case where a carbon dioxide gas is employed, although a pure gas obtained from a bomb may be utilized, an exhaust gas from a kiln during the production of slaked lime, which is industrially utilized in general, can also be used. As carbonate compounds, ammonium carbonate, sodium carbonate, sodium hydrogen carbonate, and potassium carbonate can be exemplified. In this case, since stirring by gas is not carried out, no mechanical stirring is necessary. The temperature of the carbonation is not specifically restricted, and the carbonation may be carried out at 0 to 70°C, the production thereby being easily carried out. When the carbonation is carried out under such conditions, the pH value of the raw material slurry decreases to 7-8, and the slurry is then gelatinized (in the case of a low raw material slurry concentration, the slurry may become sol, but the following explanation is made using gel except for some working example). Since no significant peak is observed in this gel measured by X-ray diffraction, the gel may be considered to be amorphous.

Next, the gel is aged (crystallized). In the aging, the temperature is not particularly restricted. In general, the higher the temperature is, the faster the gel is rapture to become slurry whereby the aging is completed. For example, at a normal temperature, the aging is completed in 2 or 3 days, and at 60-110°C, it takes 1 to 24 hours. According to X-ray diffraction, the calcium carbonate obtained as described above shows the calcite diffraction peak as major peaks, and a few or no vaterite peak is observed. Concerning the form observed by a scanning electron microscope, slight variations may be observed depending on the concentration of ethylene glycol and the contents of impurities. As a rule, the calcium carbonate has a construction where the primary particles of a minute particles of calcium carbonate whose primary particle size of less than 0.1 micron to 0.06 micron or diamond type particles with particle sizes of 0.1 to 2.0 microns are assembled in a unique manner, such as radial intergrowth crystalline to form sphere, sub-sphere, or bi-sphere secondary particles having particle sizes of 0.1 to 2.0 microns. The BET surface area of the calcium carbonate is found to be 20 to 300 $m^2/g$.

The calcium carbonate according to the present invention as described above, which can be obtained in the form of an ethylene glycol dispersion different from the aqueous dispersion obtained according to any of the conventional processes, can be added in situ without drying at the step for producing a polyester. It can be added at any step of the polyester production, but it is preferable to add the dispersion at any steps from the step for the esterification of a dicarboxylic acid component with a glycol or the initial step of the ester exchange reaction to the step where prepolymer is obtained after the reaction is ended or the initial step for the polyconsensation of the prepolymer. The amount added is 0.005 to 10.0% by weight, preferably 0.02 to 5.0% by weight, based on the polyester. If the amount is less than 0.005% by weight, the resulting film has unsatisfactory sliding properties. Conversely, if it is more than 10.0% by weight, the surface smoothness and sliding properties are disadvantageously decreased.

Since the polyester film according to the present invention contains as an inorganic filler the calcium carbonate produced in an ethylene glycol system, having a sharp particle size distribution, a little tendency to be stripped off from the film, it is particularly applicable for the magnet tape field which requires high quality image (sound), miniaturization, long term recording in comparison with the conventional polyester films.

Furthermore, after treated in a crack system manner or washed with methanol, and then dried, the calcium carbonate according to the present invention without further treatment or with treating with a phosphate, ethylene-propylene copolymer, acrylic acid, or the like, is kneaded with polyethylene or polypropylene, etc., or suspended in water followed by surface treatment with sodium salt of a fatty acid or sodium salt of resin acid and keading with polyvinyl chloride to thereby obtain a plastic molded product excelling in physical properties.

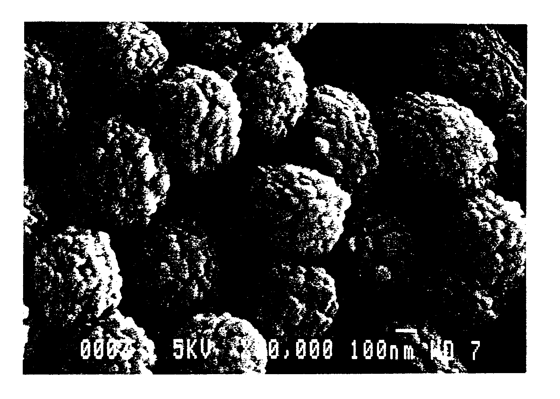

Fig. 1 is a scanning electron microscopic photograph showing the particle structure if calcium carbonate produced in Example 1 at a magnification of 50,000.

The present invention will now be described in greaer detail by referring to the working examples and comparative examples.

Example 1

Into a 3 liter round flask containing 2 kg of ethylene glycol was incorporated 100 g of industrial grade slaked lime with stirring to prepare a raw material slurry. At this time, the temperature of the slurry was 30°C, the pH was 12.0, and the electric conductivity was 2.8 mS/cm. While stirring the raw material slurry, a 100% pure carbon dioxide gas was introduced at a rate of 1 liter/minute. At the carbonation step, the pH level was almost constant, but the electric conductivity was gradually decreased. After 67 minutes, the pH level was decreased to 7.4, and the electric conductivity was decreased to 0.4 mS/cm, whereby the slurry was gelatinized. The temperature at this time was 40°C.

The flask containing the gel was warmed in a temperature constant bath at 60°C. After 2 to 3 hours, the gel was substantially destroyed, and turned into a slurry again. After 24 hours, the slurry was filtered, washed with methanol, and dried at 110°C. The x-ray diffraction of the resulting powder only showed peaks originating from calcite, except for a slight peak from vaterite. The BET surface area of the powder was found to be 141 m$^2$/g. As a result of an observation by means of a scanning electron microscope, primary particles of about 0.001 micron were assembled in a radial form to form cubic or sub-sphere secondary particles having a particle size of 0.3 to 1.0 micron. The construction of the particle observed at a magnification of 50,000 is shown in Fig.1.

Example 2

The gel produced under the same conditions as those of Example 1 was left standing at room temperature. After 2 days, the gel was destroyed to form a slurry, which was then filtered, washed with methanol, and then dried at 110°C. The X-ray diffraction of the resulting powder only showed peaks originating from calcite, except for a slight peak from vaterite. The BET surface area of the powder was found to be 165 m$^2$/g. As a result of an observation by means of a scanning electron microscope, the calcium carbonate where primary particles of about 0.01 micron were assembled in a radial form to form cubic or sub-sphere secondary particles having a particle size of 0.5 to 2.0 microns.

Example 3

The gel (100 g) produced under the same conditions as those of Example 1 was incorporated in a beaker, and heated in a dryer maintained at 110°C. The gel was destroyed in 1 hour to be turned into slurry. The slurry was filtered, washed with methanol, and then dried at 110°C. The X-ray diffraction of the resulting powder only showed peaks originating from calcite, except for a slight peak from vaterite. The BET surface area of the powder was found to be 93 m$^2$/g. As a result of an observation by means of a scanning electron microscope, primary particles of about 0.01 micron were assembled in a radial form to form cubic or sub-sphere secondary particles having a particle size of 0.5 to 1.5 microns.

Example 4

Into a 3 liter round flask containing 2 kg of ethylene glycol was incorporated 200 g of industrial grade slaked lime with stirring to prepare a raw material slurry. At this time, the temperature of the slurry was 30°C, the pH was 12.0, and the electric conductivity was 3.0 mS/cm. While stirring the raw material slurry, a 100% pure carbon dioxide gas was introduced at a rate of 1 liter/minute. At the carbonation step, the pH level was almost constant, but the electric conductivity was gradually decreased. After 68 minutes, the slurry was gelatinized, while maintaining the pH level of 10.4.

The aging of the gel was carried out under the conditions as in Example 1. After 2 to 3 hours, the gel was substantially destroyed, and turned into a slurry again. After 24 hours, the slurry was filtered, washed with methanol, and dried at 110°C. The x-ray diffraction of the resulting powder only showed peaks originating from calcite. The BET surface area of the powder was found to be 127 m$^2$/g. As a result of an observation by means of a scanning electron microscope, primary particles of about 0.01 micron were assembled in a radial form to form cubic or sub-sphere secondary particles having a particle size of 0.5 to 1.5 microns.

Example 5

Into a 3 liter round flask containing 2 kg of ethylene glycol was incorporated 50 g of industrial grade slaked lime with stirring to prepare a raw material slurry. At this time, the temperature of the slurry was 30°C, the pH was 12.6, and the electric conductivity was 3.0 mS/cm. While stirring the raw material slurry, a 100% pure carbon dioxide gas was introduced at a rate of 1 liter/minute. At the carbonation step, the pH level was almost constant, but the electric conductivity was gradually decreased. After 35 minutes, the pH level was decreased to 7.8 and the electric conductivity was decreased to 0.8 mS/cm, whereby the slurry was gelatinized. The temperature at this time was 37°C.

The aging of the gel was carried out under the conditions as in Example 1. After 1 hour, the gel was substantially turned into the original slurry again. The slurry was filtered, washed with methanol, and dried at 110°C. The x-ray diffraction of the resulting powder only showed peaks originating from calcite except for a slight peak from vaterite. The BET surface area of the powder was found to be 278 m$^2$/g. As a result of an observation by means of a scanning electron microscope, primary particles of about 0.01 micron were assembled in a radial form to form cubic or sub-sphere secondary particles having a particle size of 0.5 to 1.0 micron.

Example 6

Into a 3 liter round flask filled with a mixture of 1.8 kg of ethylene glycol and 0.2 kg of water, were incorporated 75 g of quick lime, obtained by calcining slaked lime at 500°C for 3 hours, with stirring to prepare a raw material slurry. At this time, the temperature of the slurry was 35°C, the pH was 12.2, and the electric conductivity was 4.0 mS/cm. While stirring the raw material slurry, a 100% pure carbon dioxide gas was introduced at a rate of 1 liter/minute. At the carbonation step, the pH level was almost constant, but the electric conductivity was gradually decreased. After 50 minutes, the pH level was decreased to 7.0 and the electric conductivity was decreased to 0.6 mS/cm, whereby the slurry was gelatinized. The temperature at this time was 46°C.

The aging of the gel was carried out under the conditions as in Example 1. The x-ray diffraction peaks of the calcium carbonate obtained after aging agreed with those of calcite. The BET surface area of the product was found to be 37 $m^2/g$. As a result of an observation by means of a scanning electron microscope, diamond form calcite particles are assembled in the radial form to form cubic or sub-sphere secondary particles having a particle size of 0.6 to 1.0 micron.

Example 7

Into a 3 liter round flask filled with a mixture of 1.8 kg of ethylene glycol and 0.2 kg of water, were incorporated 25 g of agent grade metal calcium and 40 g of quick lime, obtained by calcining an agent grade slaked lime at 500°C for 3 hours, with stirring to prepare a raw material slurry. At this time, the temperature of the slurry was 38°C, the pH was 12.5, and the electric conductivity was 3.9 mS/cm. While stirring the raw material slurry, a 100% pure carbon dioxide gas was introduced at a rate of 1 liter/minute. At the carbonation step, the pH level was almost constant, but the electric conductivity was gradually decreased. After 50 minutes, the pH level was decreased to 7.2 and the electric conductivity was decreased to 0.6 mS/cm, whereby the slurry was gelatinized. The temperature at this time was 48°C.

The aging of the gel was carried out under the conditions as in Example 1. The x-ray diffraction peaks of the calcium carbonate obtained after aging agreed with those of calcite. The BET surface area of the product was found to be 110 $m^2/g$. As a result of an observation by means of a scanning electron microscope, primary particles of about 0.01 micron were assembled in a radial form to form cubic or sub-sphere secondary particles having a particle size of 0.5 to 0.9 micron.

Example 8

Into a 3 liter round flask filled with 1.8 kg of ethylene glycol, was incorporated 150 g of calcium chloride with stirring to be suspended. Subsequently, 98 g of ammonium carbonate was dissolved in 200 g of water, and the solution was gradually added to the slurry of calcium chloride in ethylene glycol with stirring at 500 rpm to carry out the carbonation. The slurry was gelatinized 2 minutes after the addition of ammonium carbonate.

The aging of the gel was carried out under the conditions as in Example 1. The x-ray diffraction peaks of the calcium carbonate obtained after aging agreed with those of calcite. The BET surface area of the product was found to be 98 $m^2/g$. As a result of an observation by means of a scanning electron microscope, primary particles of about 0.01 micron were assembled in a radial form to form cubic or sub-sphere secondary particles having a particle size of 0.7 to 1.7 microns.

Example 9

To 4 kg of ethylene glycol was added 1 kg of industrial grade slaked lime followed by stirring, the mixture was transferred to a 30 liter volume stainless-made reactor, and another 15 kg of ethylene was added to prepare a raw material slurry. At this time, the temperature of the slurry was 30°C, the pH was 12.4, and the electric conductivity was 3.3 mS/cm. While stirring the raw material slurry, a gaseous mixture comprising 30 volume% of carbon dioxide gas and air was introduced at a rate of 66.7 liter/minute. At the carbonation step, the pH level was almost constant, but the electric conductivity was gradually decreased to 0.8 mS/cm. After 40 minutes, the slurry was gelatinized at a pH level of 8.0. The temperature at this time was 38°C.

The total amount of the gel was heated to 60°C. The gel was substantially destroyed in 2 to 3 hours to be turned into the slurry again. The slurry was filtered, washed with methanol, and dried at 110°C. The x-ray diffraction peaks of the resulting powder agreed with those of calcite. The BET surface area of the product was found to be 163 $m^2$/g. As a result of an observation by means of a scanning electron microscope, primary particles of about 0.01 micron were assembled in a radial form to form cubic or sub-sphere secondary particles having a particle size of 0.3 to 1.0 micron.

Example 10

To 4 kg of ethylene glycol was added 670 g of slaked lime followed by stirring, the mixture was transferred to a 30 liter volume stainless-made reactor, and another 15 kg of ethylene was added to prepare a raw material slurry. At this time, the temperature of the slurry was 34°C, the pH was 12.2, and the electric conductivity was 3.8 mS/cm. While stirring the raw material slurry, a gaseous mixture comprising 30 volume% of carbon dioxide gas and air was introduced at a rate of 66.7 liter/minute. At the carbonation step, the pH level was almost constant, but the electric conductivity was gradually decreased to 0.8 mS/cm. After 40 minutes, the slurry was gelatinized at a pH level of 7.2. The temperature at this time was 44°C.

The total amount of the gel was heated to 60°C. The gel was substantially destroyed in 2 to 3 hours to be turned into the slurry again. The slurry was filtered, washed with methanol, and dried at 110°C. The x-ray diffraction peaks of the resulting powder agreed with those of calcite. The BET surface area of the product was found to be 166 $m^2$/g. As a result of an observation by means of a scanning electron microscope, primary particles of about 0.01 micron were assembled in a radial form to form cubic or sub-sphere secondary particles having a particle size of 0.2 to 1.0 micron.

Example 11

In a 3 liter round flask, 1.8 kg of ethylene glycol and 0.2 kg of water were mixed, 200 g of industrial grade slaked lime was incorporated therein with stirring to prepare a raw material slurry. At this time, the temperature of the slurry was 30°C, the pH was 12.0, and the electric conductivity was 3.0 mS/cm. While stirring the raw material slurry, a 100% pure carbon dioxide gas was introduced at a rate of 1 liter/minute. After 54 minutes of the carbonation, the slurry was gelatinized at which pH level was 10.8.

The aging of the gel was carried out under the conditions as in Example 1. The gel was destroyed after 2 hours and turned into the slurry again. The slurry was filtered, washed with methanol, and dried at 110°C. The x-ray diffraction of the resulting powder only showed the peaks originaling from calcite. The BET surface area of the product was found to be 54 $m^2$/g. As a result of an observation by means of a scanning electron microscope, primary particles of about 0.01-0.04 micron were assembled in a radial form to form cubic or sub-sphere secondary particles having a particle size of 0.5 to 1.0 micron.

Example 12

In a 3 liter round flask, 1.8 kg of ethylene glycol and 0.2 kg of diethylene glycol were mixed, and then 200 g of industrial grade slaked lime was incorporated there in with stirring to prepare a raw material slurry. At this time, the temperature of the slurry was 30°C, the pH was 12.0, and the electric conductivity was 2.0 mS/cm. While stirring the raw material slurry, a 100% pure carbon dioxide gas was introduced at a rate of 1 liter/minute. After 51 minutes of the carbonation, the slurry was gelatinized at which pH level was 11.0, electric conductivity was 2.0 mS/cm, and the temperature was 51°C.

The aging of the gel was carried out under the onditions as in Example 1. The gel was destroyed after 4 hours and turned into the slurry again. The slurry was filtered, washed with methanol, and dried at 110°C. The x-ray diffraction of the resulting powder only showed the peaks originating from calcite. The BET surface area of the product was found to be 44 $m^2$/g. As a result of an observation by means of a scanning electron microscope, primary particles of about 0.01-0.04 micron were assembled in a radial form to form cubic or sub-sphere secondary particles having a particle size of 0.7 to 1.0 micron.

Comparative Example 1

In a 3 liter round flask, 1 kg of ethylene glycol and 1 kg of water were mixed, and then 200 g of industrial grade slaked lime was incorporated therein with stirring to prepare a raw material slurry. At this time, the temperature of the slurry was 24.5°C, the pH was 12.0, and the electric conductivity was 5.6 mS/cm. While stirring the raw material slurry, a 100% pure carbon dioxide gas was introduced at a rate of 1 liter/minute. At the carbonation step, the pH level was almost constant, but the electric conductivity was gradually decreased. After 70 minutes, the pH level was decreased to 7.2, and the electric conductivity was decreased to 0.2 mS/cm, whereby the slurry was gelatinized. The temperature at this time was 44°C

The slurry was filtered, washed with methanol, and dried at 110°C. The x-ray diffraction of the resulting powder only agreed with calcite. However, the BET surface area of the product was found to be 18 $m^2$/g. As a result of an observation by means of a scanning electron microscope, calcite particles of about 0.02-0.2 micron were aggregated to form a pole state.

Comparative Example 2

In a 3 liter round flask, 1.4 kg of ethylene glycol and 0.6 kg of water were mixed, and then 200 g of industrial grade slaked lime was incorporated therein with stirring to prepare a raw material slurry. At this time, the temperature of the slurry was 20°C, the pH was 13.0, and the electric conductivity was 4.4 mS/cm. While stirring the raw material slurry, a 100% pure carbon dioxide gas was introduced at a rate of 1 liter/minute. At the carbonation step, the pH level was almost constant, but the electric conductivity was gradually decreased. After 70 minutes, the pH level was decreased to 7.2, and the electric conductivity was decreased to 1.2 mS/cm, but no change in the properties of the slurry could be observed. The temperature at this time was 43°C.

The slurry was filtered, washed with methanol, and dried at 110°C. The x-ray diffraction of the resulting powder only agreed with calcite. However, the BET surface area of the product was found to be 8 $m^2$/g. As a result of an observation by means of a scanning electron microscope, calcium carbonate whose major axis is 1.0-2.5 microns was in form a spindle.

Comparative Example 3

Into a 3 liter round flask filled with 2 kg of diethylene glycol, 100 g of industrial grade slaked lime was incorporated with stirring to prepare a raw material slurry. At this time, the temperature of the slurry was 30°C, the pH was 13.5, and the electric conductivity was 0.0 mS/cm. While stirring the raw material slurry, a 100% pure carbon dioxide gas was introduced at a rate of 1 liter/minute. However, even after the introduction of carbon dioxide gas over a period of 3 hours, neither pH change nor gelatinization was observed. The slurry was filtered, dried at 110°C, and the X-ray diffraction was carried out. As a result, diffraction pattern of calcium hydroxide was seen.

Comparative Example 4

Into a 3 liter round flask filled with 2 kg of propylene glycol, 100 g of industrial grade slaked lime was incorporated with stirring to prepare a raw material slurry. At this time, the temperature of the slurry was 30°C, the pH was 13.0, and the electric conductivity was 0.1 mS/cm. While stirring the raw material slurry, a 100% pure carbon dioxide gas was introduced at a rate of 1 liter/minute. However, even after the introduction of carbon dioxide gas over a period of 3 hours, neither pH change nor gelatinization was observed. The slurry was filtered, dried at 110°C, and the X-ray diffraction was carried out. As a result, diffraction pattern of calcium hydroxide was seen.

Example 13

The calcium carbonate obtained in Example 1 was incorporated in a Henschel mixer, and an ethylene-propylene copolymer (prulonic) was sprayed at a rate of 5 parts per $CaCO_3$, stirred, dried, and then ground into powder by pulverization with a hammer mill. A test for kneading the powder with a polyethylene was carried out, and the results are shown as follows:

Table 1

Formulation

LDPE (produced by UCC, DYNH.M=21,000,                    100 parts

M=1.5-2.4)

Sample                                                          50 parts

| Filler | Example 13 | Commerce $CaCO_3$ | Commerce Talc |
|---|---|---|---|
| Tensile Strength ($kg/cm^2$) | 145 | 93 | 134 |
| Yield Strength ($kg/cm^2$) | 132 | 93 | 120 |
| Elongation at Break (%) | 58 | 57 | 49 |
| Yield Elongation (%) | 25 | 22 | 17 |
| Tensile modulus ($kg/cm^2$ x $10^2$) | 49 | 31 | 35 |
| Hardness (Shore) | 55 | 53 | 51 |

Example 14

The calcium carbonate obtained in Example 1 was incorporated in a Henschel mixer, and a diester of phosphoric acid was sprayed at a rate of 5 parts per $CaCO_3$, stirred, dried, and then ground into powder by pulverization with a hammer mill. A test for kneading the powder with a polyethylene was carried out, and the results are shown in Table 2.

Comparative Example 5

A colloidal calcium carbonate of 0.04 micron obtained by introducing carbon dioxide gas into a suspo-emulsion of line having a concentration of 5% at 15°C was aged at 2 days at 80°C to produce a cubic calcium carbonate of 0.3 micron. The suspension was concentrated to 15%, and surface treated by adding diester of phosphoric acid at a rate of 5 parts per $CaCO_3$, followed by drying, grinding into powder. The powder was kneaded with polypropylene as in Example 14.

The results of PP test concerning Example 14 and Comparative Example 5 are as follows:

Table 2

Formulation

PP (produced by Mitsui Toatsu,                    100 parts

JHH-G, M16-9)

Sample                                            30 parts

| Filler | Example 14 | Comp. Ex. 5 | Commerce $CaCO_3$ | Jpn. Clay |
|---|---|---|---|---|
| Tensile Strength $(kg/cm^2)$ | 310 | 265 | 270 | 290 |
| Elongation at Break (%) | 90 | 60 | 60 | 90 |
| Hardness (Shore) | 72 | 68 | 70 | 72 |
| Izod impact Resistance* $(kg-cm/cm^2)$ | 3.2 | 2.7 | 2.5 | 2.4 |
| Flowability ** | 4.1 | 3.4 | 3.5 | 1.8 |

*: Notched, Cross-section of notched portion: 6 mm width x 10 mm thickness, 30℃

**: Variable flow tester. load: 20 $kg/cm^2$, Temp 180℃, Nozzle 1 mm inner diameter x 10 mm

Example 15

The calcium carbonate obtained in Example 1 was dispersed in water to prepare an aqueous suspension having a concentration of 15%, and surface treated with a sodium salt of fatty acid at a rate of 3 parts per $CaCO_3$, followed by drying, grinding into powder. The powder was kneaded with polyvinyl chloride.

Comparative Example 6

The calcium carbonate of 0.3 micron without any treatment obtained in Comparative Example 5 was surface treated with a sodium salt of fatty acid as in Example 15, and the resulting powder was kneaded with polyvinyl chloride.

The results of PVC test concerning Example 15 and Comparative Example 6 are as follows:

Table 3

Formulation

| | |
|---|---|
| Geon 103EP-8J | 100 parts |
| Lead stearate | 1 part |
| Tribasic lead sulfate | 3 parts |
| Filler | 30 parts |

Mixing;     at 160℃, for 5 minutes using a 8" x 16" roll

Molding;     at 170℃ for 10 minutes by press molding

| Filler | Izod Impact Strength $(kg-cm/cm^2)$ V-Notched | Hardness (Shore) |
|---|---|---|
| Example 15 | 10.5 | 89 |
| Comp. Ex. 6 | 6.0 | 86 |
| Commerce Collidal $CaCO_3$ | 7.5 | 86 |
| Commerce Heavy $CaCO_3$ | 3.4 | 86 |

Example 16

A polycondensation was carried out in a conventional manner using terephthalic acid as an acid component and ethylene glycol as a glycol component to which the calcium carbonate obtained from Example 9 was added in an amount of 0.3% by weight (solid amount) to obtain a polyester containing calcium carbonate which had an inherent viscosity of 0.62. The polyester was dried in a conventional manner, extruded into a non-stretched sheet. The sheet was then stretched 5.0 times in a machine direction at 125°C followed by stretching 3.8 times in a cross-machine direction at 115°C. A thermal treatment of the sheet at 210°C for 10 seconds gave a 15 micron thick bi-axially stretched polyester film.

Example 17

Example 16 was repeated except that the calcium carbonate obtained from Example 10 was used.

Comparative Example 7

Example 16 was repeated except for using comparative sample A obtained by dispersing a commercially available synthetic calcium carbonate of 0. 50 micron in ethylene glycol by stirring in a homogenizer at a high rotation.

Comparative Example 8

Example 16 was repeated except for using comparative sample B obtained by dispersing a commercially available synthetic calcium carbonate of 0.25 micron in ethylene glycol by stirring in a homogenizer at a high rotation.

Comparative Example 9

Example 16 was repeated except that comparative sample C was produced by dispersing a commercially available synthetic sphere silica of 0.30 micron in ethylene glycol by stirring in a homogenizer at a high rotation, and 0.23% by weight of the resulting comparative sample C was added in place of adding 0.3% by weight (solid weight) of calcium carbonate obtained from Example 9.

Comparative Example 10

Example 16 was repeated except that comparative sample D was produced by dispersing a commercially available synthetic sphere silica of 0.28 micron in ethylene glycol by stirring in a homogenizer at a high rotation, and 0.23% by weight of the resulting comparative sample D was added in place of adding 0.3% by weight (solid weight) of calcium carbonate obtained from Example 9.

Comparative Example 11

Example 16 was repeated except that comparative sample E was produced by dispersing a commercially available synthetic titanium dioxide of 0.25 micron in ethylene glycol by stirring in a homogenizer at a high rotation, and 0.43% by weight of the resulting comparative sample E was added in place of adding 0.3% by weight (solid weight) of calcium carbonate obtained from Example 9.

Comparative Example 12

Example 16 was repeated except that comparative sample F was produced by dispersing a commercially available synthetic titanium dioxide of 0.21 micron in ethylene glycol by stirring in a homogenizer at a high rotation, and 0.43% by weight of the resulting comparative sample F was added in place of adding 0.3% by weight (solid weight) of calcium carbonate obtained from Example 9.

Table 4

| | Average Particle size (micron) | Sliding Properties (class) | Surface-smoothness (Ra) | Anti-wearing (class) | Number of Extra large projection (class) |
|---|---|---|---|---|---|
| Example 16 | 0.54 | 1 | 0.012 | 1 | 1 |
| Example 17 | 0.40 | 1 | 0.010 | 1 | 1 |
| Comp. 7 | 0.50 | 3 | 0.043 | 5 | 5 |
| Comp. 8 | 0.25 | 2 | 0.039 | 4 | 4 |
| Comp. 9 | 0.30 | 2 | 0.022 | 4 | 3 |
| Comp. 10 | 0.28 | 2 | 0.027 | 3 | 4 |
| Comp. 11 | 0.25 | 2 | 0.020 | 3 | 3 |
| Comp. 12 | 0.21 | 2 | 0.018 | 2 | 2 |

The sliding properties, surface smoothness, anti-wearing properties, and the numbers of extra large projection of the polyester films produced in Examples 16 and 17 and Comparative Examples 7 to 12 were measured. The results are shown in Table 4 all together.

The sliding properties, surface smoothness, anti-wearing properties, and the number of extra large projection were measured as follows :

13

(1) Sliding properties:

A static friction coefficient was measured according to ASTM-D-1894B, and classified into 3 ranks based on the value obtained, which was used as the index of the sliding properties.

| Friction Coefficient | Sliding Properties |
|---|---|
| Less than 1.2 | 1 |
| not more than 1.2 and less than 2.0 | 2 |
| not less than 2.0 | 3 |

The smaller the value of the friction coefficient, the better sliding properties are.

(2) Surface Smoothness:

The surface smoothness was measured according to JIS B0601 using a surfcom surface smoothness tester. The roughness of the center line (Ra) was measured under the conditions: needle diameter: 2 microns, load: 70 mg, base length of measurement : 0.25 mm, cutting off: 0.08 mm.

(3) Anti-wearing Properties:

A roll in the tape form obtained by slitting the film in the short length direction was rubbed with a guide roll made of stainless steel running at a high speed for a long period. The amount of white powder generated on the surface of the guide roll at a constant applied tension was classified into 5 ranks.

| Anti-wearing Properties | Amount of White Powder Generated |
|---|---|
| 1 | No |
| 2 | Slight |
| 3 | Generation |
| 4 | Large |
| 5 | Very Large |

(4) Number of Extra large projection

After aluminum thin film was deposited on the surface of the film, the number of extra large projection of tetra- or more ring was counted (the number per $mm^2$ of the area measured) using a two-beam interference microscope, and the degree of the number of the extra large projections were classified into 5 ranks.

| Rank | Number of Extra large projections |
|---|---|
| 1 | $0\text{-}3/mm^2$ |
| 2 | $4\text{-}7/mm^2$ |
| 3 | $8\text{-}11/mm^2$ |
| 4 | $12\text{-}15/mm^2$ |
| 5 | 16 or more/$mm^2$ |

**Claims**

1. An ethylene glycol dispersion of crystalline calcium carbonate produced by carbonation in an ethylene glycol system.

2. A crystalline calcium carbonate obtained from the dispersion of claim 1.

3. The ethylene glycol dispersion of crystalline calcium carbonate according to claim 1, which comprises subjecting at least one calcium compound selected from among calcium oxide, calcium hydroxide, calcium halide, and metal calcium to be carbonated in a medium containing at least 80% by weight of ethylene glycol, followed by aging.

4. A crystalline calcium carbonate obtained from the dispersion of claim 3.

5. The ethylene glycol dispersion of crystalline calcium carbonate according to claim 1, wherein the secondary particle size is within the range of 0.1 to 2.0 microns, and BET specific surface area is in the range of 20 to 300 $m^2/g$.

6. A crystalline calcium carbonate obtained from the dispersion of claim 5.

7. A plastic molded product containing a calcium carbonate, which is produced by a carbonation in an ethylene glycol, either with or without surface treatment with a treating agent having a high affinity with the plastic.

8. The plastic molded product according to claim 7, characterized in that said calcium carbonate is obtained by subjecting at least one calcium compound selected from among calcium oxide, calcium hydroxide, calcium halide, and metal calcium to be carbonated in a medium containing at least 80% by weight of ethylene glycol, followed by aging.

9. The plastic molded product according to claim 7, where in said calcium carbonate has a secondary particle size in the range of 0.1 to 2.0 microns, and BET specific surface in the range of 20 to 300 $m^2/g$.

10. A polyester film containing a calcium carbonate, which is produced by a carbonation in an ethylene glycol, either with or without surface treatment with a treating agent having a high affinity with the plastic.

11. The polyester film according to claim 10, where in said calcium carbonate is contained in an amount of 0.005 to 10.0% by weight based on the polyester.

000 5KV 0,000 100nm 7

European Patent
Office

EUROPEAN SEARCH REPORT

Application Number

EP    92 11 1042
Page 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | PATENT ABSTRACTS OF JAPAN<br>vol. 12, no. 338 (C-527)12 September 1988<br>& JP-A-63 100 011 ( SUMITOMO CHEM ) 2 May 1988 | 1-4 | C01F11/18<br>C08K3/26 |
| Y | * abstract *<br>--- | 7-11 | |
| Y | US-A-5 015 295 (LAMOND)<br>* the whole document *<br>--- | 7-9 | |
| Y | EP-A-0 296 610 (MARUO CALCIUM)<br>* page 3, line 54 - line 58 *<br>* page 20, line 2 - line 9 * | 10-11 | |
| D | & JP-A-1 004 239 (MARUO CALCIUM)<br>9 January  1989 | | |
| D | & JP-A-1 004 240 (MARUO CALCIUM)<br>9 January  1989<br>--- | | |
| D,X | PATENT ABSTRACTS OF JAPAN<br>vol. 008, no. 162 (C-235)26 July 1984<br>& JP-A-59 064 527 ( SHIRAISHI CHUO KENKYUSHO KK ) 12 April 1984<br>* abstract *<br>--- | 1-6 | |
| X | CHEMICAL ABSTRACTS, vol. 103, no. 18, November 1985, Columbus, Ohio, US;<br>abstract no. 144156y,<br>T. YASUE ET AL. 'Synthesis and characteristics of amorphous calcium carbonate in ethanol.'<br>page 126 ;<br>* abstract *<br>& GYPSUM LIME<br>vol. 198, 1985,<br>pages 245 - 252<br>--- | 1,2 | TECHNICAL FIELDS SEARCHED (Int. Cl.5)<br><br>C01F<br>C09C<br>C08K |
| X | US-A-4 888 160 (KOSIN ET AL.)<br>* figures; example 5 *<br>---<br>-/-- | 5,6 | |

The present search report has been drawn up for all claims

| Place of search | Date of completion of the search | Examiner |
|---|---|---|
| THE HAGUE | 29 OCTOBER 1992 | ZALM W.E. |

EPO FORM 1503 03.82 (P0401)

European Patent
Office

EUROPEAN SEARCH REPORT

Application Number

EP    92 11 1042
Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | WORLD SURFACE COATING ABSTRACTS vol. 46, no. 377, November 1973, page 1082 'Calcium carbonate particles.' & JP-A-48 017 438 (SHIRAISHI INDUSTRIAL) --- | 1-6 | |
| P,X | EP-A-0 459 317 (MARUO CALCIUM) * page 6, line 4 - line 14; claims 1-4 * ----- | 1-7,9-11 | |

TECHNICAL FIELDS
SEARCHED (Int. Cl.5)

The present search report has been drawn up for all claims

| Place of search | Date of completion of the search | Examiner |
|---|---|---|
| THE HAGUE | 29 OCTOBER 1992 | ZALM W.E. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document